# FASCICULE DE BREVET EUROPEEN

(11) **EP 0 577 505 B1**
(45) Date de publication et mention de la délivrance du brevet: **22.05.1996**
(21) Numéro de dépôt: 93401684.1
(22) Date de dépôt: 30.06.1993
(51) Int. Cl.: B29C 70/34

(54) **Installation pour la fabrication par drapage de structures multicouches en matériaux composites**
Einhüllanlage zur Herstellung von mehrlagigen Strukturen aus Kompositmaterialien
Apparatus for the fabrication by draping of multilayered structures of composite material

(30) Priorité: 02.07.1992 FR 9208142
(43) Date de publication de la demande: 05.01.1994
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Morizot, Richard Albert Pierre, F-77250 Villemer (FR); Nioche, Jean-Yves Marie, F-91530 St. Maurice Montcouronne (FR)

(56) Documents cités:
- EP-A- 0 271 263
- WO-A-89/08541
- DE-A- 2 604 475

## Description

L'invention concerne une installation permettant de réaliser des structures multicouches en matériaux composites, de façon automatisée, par drapage sur une matrice de formage de couches élémentaires prédécoupées.

Des structures en matériaux composites sont utilisées de plus en plus fréquemment, notamment dans les industries aéronautique et spatiale. Cette évolution s'explique à la fois par le gain de poids qui découle de l'utilisation de telles structures et par les propriétés mécaniques remarquables de ces structures. En effet, les fibres textiles formant la trame des matériaux composites peuvent être orientées à volonté lors de la fabrication des structures, afin de conférer à ces dernières une tenue mécanique accrue dans les directions appelées à subir les contraintes mécaniques les plus fortes.

Le plus souvent, les structures en matériaux composites sont fabriquées à partir de couches élémentaires, généralement appelées "plis", formées de fibres textiles préimprégnées de résine, par exemple de type thermodurcissable. Selon le cas, les fibres de chacune des couches élémentaires peuvent être des fibres parallèles juxtaposées, orientées selon une direction donnée, ou former un tissu dans lequel les fibres sont orientées selon deux directions différentes.

Les couches élémentaires sont superposées ou empilées au cours d'une opération de drapage, après quoi la structure obtenue est compactée, puis rigidifiée, par exemple par élévation de la température jusqu'à la température de polymérisation de la résine, lorsque celle-ci est thermodurcissable.

Lors de la fabrication de telles structures multicouches en matériaux composites, l'opération de drapage constitue l'étape la plus délicate, car elle nécessite de mettre en place chacune des couches élémentaires avec une grande précision, aussi bien en ce qui concerne son orientation qu'en ce qui concerne son positionnement sur les couches précédentes.

Compte tenu de cette difficulté, cette étape de drapage est le plus souvent réalisée manuellement (dans plus de 90 % des cas), à partir de couches élémentaires prédécoupées par une machine de découpe. Il en résulte que la qualité et la reproductibilité des pièces obtenues sont aléatoires et que ces pièces sont coûteuses (le drapage représente généralement entre environ un tiers et la moitié du prix de la pièce obtenue).

Pour la fabrication de pièces de grandes dimensions telles que des voilures d'aéronef, on utilise parfois des machines de drapage telles que celle qui est décrite dans le document FR-A-2 620 081. Ces machines, particulièrement complexes et coûteuses, assurent à la fois la découpe et la mise en place des couches élémentaires à partir de bandes enroulées. Les rouleaux contenant ces bandes, les organes de découpe et les organes de mise en place sont portés par une tête orientable qui se déplace et s'oriente au-dessus de la matrice de formage selon un programme préétabli. Cependant, de telles machines sont extrèmement coûteuses et leur mise en oeuvre est délicate, ce qui limite jusqu'à présent leur utilisation à la fabrication de pièces de grandes dimensions, pour lesquelles le drapage manuel est particulièrement délicat.

En outre, on connait du document FR-A-2 511 656 une installation de drapage dans laquelle chacune des couches élémentaires, préalablement découpées, est maintenue par succion sur une bande de transfert qui amène cette couche au-dessus de la matrice de formage. Une dépression réalisée entre la bande de transfert et la matrice de formage permet alors d'appliquer la couche élémentaire sur la matrice, afin d'assurer à la fois sa mise en forme et sa mise en place. Cependant, cette installation nécessite l'intervention d'un opérateur afin d'amener chacune des couches élémentaires sur la bande de transfert et de la positionner avec précision sur cette bande à l'aide d'un patron placé en dessous de cette bande dans la zone servant à la mise en place des couches élémentaires prédécoupées. Si cette installation permet d'automatiser partiellement l'opération de drapage, elle ne supprime donc pas les inconvénients du drapage manuel concernant les difficultés qu'il y a à obtenir une fabrication de qualité et reproductible.

On connaît aussi du document EP-A-0 271 263 une installation comprenant un outil permettant d'assurer la préhension d'une couche élémentaire ou d'un empilement de couches préimprégnées de résine sur une table de découpe, le préformage de cette couche ou de cet empilement sur une contre-forme appartenant à l'outil, puis son transfert et son drapage sur une matrice de formage. L'outil comprend une membrane souple qui épouse au repos la forme de la contre-forme. L'introduction d'air comprimé dans l'espace formé entre la membrane et la contre-forme assure la préhension, grâce à l'adhérence des couches préimprégnées. Le préformage est ensuite obtenu en faisant le vide dans l'espace précité. Enfin, cet espace est à nouveau relié à une source d'air comprimé, afin de déposer les couches sur la matrice de formage, et l'outil est progressivement écarté de cette dernière.

Cette installation permet d'automatiser complètement l'opération de drapage. Cependant, elle n'est utilisable que lorsque les couches élémentaires sont préimprégnées de résine et adhèrent sur la membrane et sur la matrice de formage.

L'invention a précisément pour objet une installation d'un type nouveau, permettant de réaliser de façon entièrement automatique la préhension de couches élémentaires prédécoupées imprégnées ou non de résine, leur mise en forme et leur compactage, d'une manière parfaitement reproductible et permettant de garantir la qualité des pièces obtenues, sans que le coût en soit prohibitif, pour des structures multicouches en matériaux composites de petites et moyennes dimensions.

Conformément à l'invention, ce résultat est obtenu au moyen d'une installation, pour la fabrication de structures multicouches en matériaux composites, par drapage de couches élémentaires prédécoupées, comprenant:
- une matrice de formage ; et
- un outil de préhension, de mise en forme et de compactage, comportant :
   - un support ;
   - une contre-forme, complémentaire de la matrice de formage, montée sur le support ;
   - une membrane souple fixée à sa périphérie sur un bord du support, en vis-à-vis de la contre-forme ;
   - des moyens pour créer une dépression entre la contre-forme et la membrane souple ; et
   - des moyens pour presser la membrane contre la matrice de formage ;
caractérisée par le fait que la membrane est fixée sur un bord plan du support, de telle sorte qu'elle n'est normalement pas en contact avec la contre-forme, et par le fait que la membrane est munie de ventouses de préhension à dépression sur sa face opposée à la contre-forme.

Dans une telle installation, l'outil de préhension est monté avantageusement sur des moyens de transfert tels qu'un bras articulé de robot, permettant de déplacer cet outil entre un poste de préhension des couches élémentaires prédécoupées et un poste de drapage comportant la matrice de formage. Il est ainsi possible de réaliser le drapage de manière totalement automatisée, sans avoir recours à une machine de drapage complexe et coûteuse, en garantissant à la fois la qualité et la reproductibilité des structures obtenues.

Selon un mode de réalisation préféré de l'invention, l'outil de préhension comporte de plus des moyens d'aspiration aptes à être reliés aux ventouses.

De préférence, la membrane souple et la contre-forme forment entre elles un espace clos communiquant par des passages avec un collecteur formé dans le support, à l'opposé de la membrane par rapport à la contre-forme. Les moyens pour créer une dépression entre la contre-forme et la membrane comprennent alors des moyens de mise en dépression aptes à être reliés au collecteur. De façon comparable, les moyens pour presser la membrane de formage comprennent une source de pression apte à être reliée au collecteur.

Dans cette configuration, chacune des ventouses est avantageusement reliée à au moins un compartiment d'aspiration par un tube souple traversant le contre-moule de façon à pouvoir coulisser à l'intérieur de ce dernier lors d'une déformation de la membrane. Ce compartiment d'aspiration est placé dans le collecteur et communique avec les moyens d'aspiration.

Afin de permettre un positionnement satisfaisant de l'outil de préhension par rapport à la machine de découpe et à la matrice de formage, le support de cet outil comporte de préférence une butée entourant la membrane souple et faisant saillie au-delà de sa première face. Cette butée est apte à venir en appui étanche sur une surface de butée entourant une surface de formage de la matrice de formage.

Afin d'améliorer encore le positionnement de l'outil par rapport à la matrice de formage, le support de l'outil est avantageusement prévu pour coopérer avec des moyens de centrage associés à la matrice.

Pour permettre le maintien des couches élémentaires prédécoupées sur la matrice de formage lors du relâchement des moyens de préhension associés à la membrane souple, la surface de formage de la matrice est munie, au moins dans sa partie centrale, de perforations reliées à des deuxièmes moyens d'aspiration.

On décrira à présent, à titre d'exemple non limitatif, un mode de réalisation préféré de l'invention, en se référant aux dessins annexés, dans lesquels :
- la figure 1 est une vue de dessus illustrant de façon schématique une installation conforme à l'invention ;
- la figure 2 est une vue en coupe verticale représentant l'outil de préhension et la matrice de formage de l'installation illustrée sur la figure 1 ; et
- les figures 3A à 3D représentent schématiquement, en coupe verticale partielle, quatre étapes successives de mise en oeuvre de l'installation conforme à l'invention.

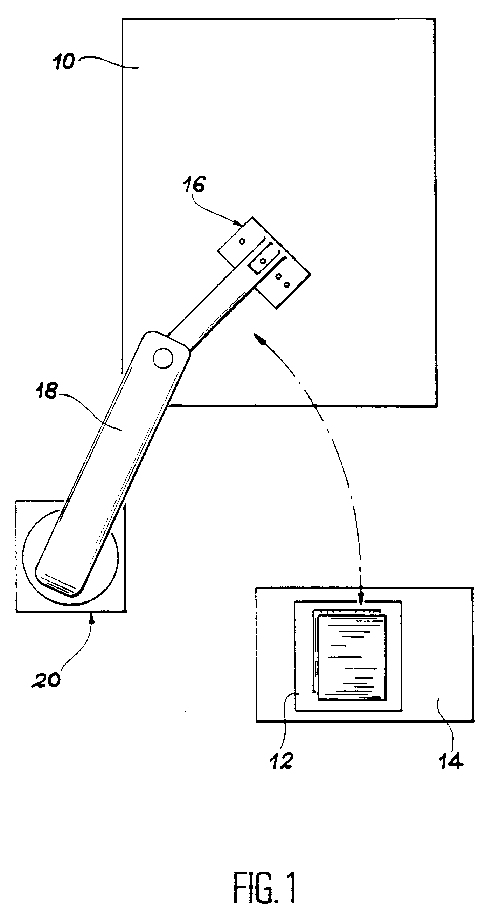

Sur la figure 1, la référence 10 désigne la table de sortie d'une machine de découpe telle qu'une machine de découpe par jet fluide ou à couteau ultra-sons par exemple, sur laquelle sont reçues des pièces élémentaires, dépourvues de film protecteur, découpées aux formes voulues à partir d'une bande continue formée de fibres textiles préimprégnées de résine, par exemple de type thermodurcissable. Ces différentes pièces élémentaires prédécoupées sont destinées à former les couches successives d'une structure multicouches en matériau composite, par drapage des couches élémentaires prédécoupées sur une matrice de formage 12 située à un poste de drapage 14 localisé à proximité de la table 10.

Conformément à l'invention, il est proposé une installation permettant de réaliser de façon automatique la préhension des pièces élémentaires prédécoupées sur la table 10, leur mise en forme, puis leur compactage sur la matrice 12.

Cette installation comprend principalement un outil de préhension 16, prévu pour être monté sur un engin de transfert tel que le bras articulé 18 d'un robot 20. L'installation est complétée par la matrice de formage 12.

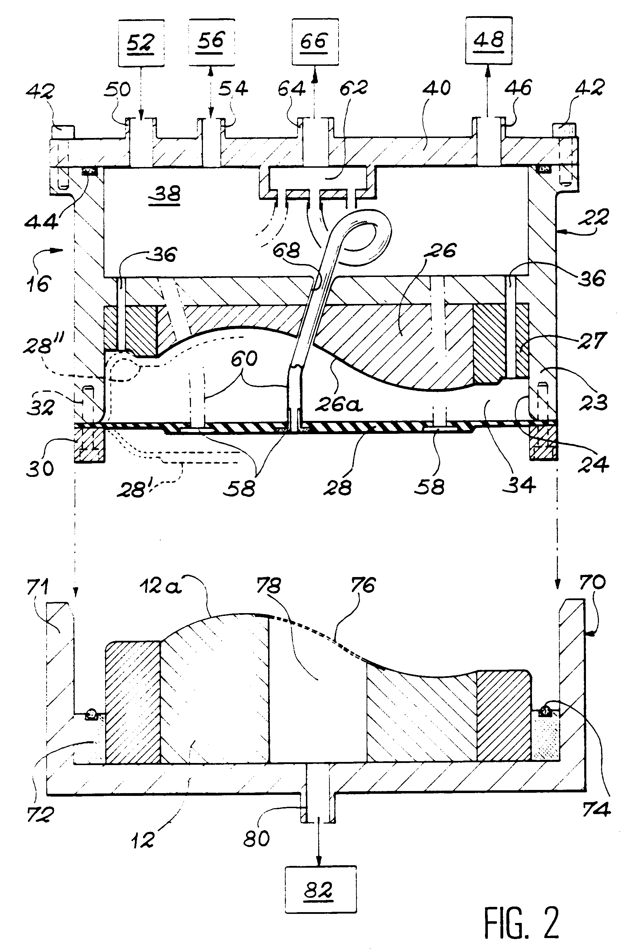

La structure de l'outil de préhension 16 va à présent être décrite en détail en se référant à la figure 2.

L'outil de préhension 16 comprend un corps ou support 22 qui présente en section une forme comparable à la section de la matrice 12, mais dont les dimensions sont légèrement supérieures. Sur sa face prévue pour être tournée vers la pièce élémentaire à saisir et vers la matrice de formage 12, le support 22 comporte un évidement 24 dans lequel est fixée une contre-forme 26 présentant une face active 26a complémentaire de la surface de formage 12a de la matrice 12. Un cadre 27 est également fixé dans l'évidement 24, autour de la contre-forme 26.

Autour de l'évidement 24, le support 22 forme une nervure périphérique 23, terminée par un bord plan sur lequel est fixé de façon étanche la périphérie d'une membrane 28, souple et étanche. L'agencement de la membrane 28 est telle qu'elle n'est normalement pas en contact avec la face extérieure active 26a de la contre-forme 26. La fixation de la membrane 28 sur le bord plan de la nervure périphérique 23 est réalisée par pincement, au moyen d'une butée annulaire 30 dont le contour correspond à celui de la nervure 23 et qui est fixée sur le bord plan de cette dernière par des vis 32. Cette butée 30 fait saillie sur une distance déterminée au-delà de la face extérieure active de la membrane 28.

L'espace clos 34 formé entre la membrane 28 et la contre-forme 26 communique avec un collecteur étanche 38 par des passages 36 formés dans le cadre 27 et dans le support 22, autour de la contre-forme 26. Le collecteur 38 est formé dans le support 22 en un emplacement voisin de l'évidement 24 dans lequel est reçue la contre-forme 26, mais à l'opposé de la membrane 28 par rapport à cette contre-forme. Comme l'illustre la figure 2, l'accès au collecteur 38 peut être facilité par la présence d'un couvercle amovible 40 fixé par des vis 42, l'étanchéité du collecteur étant préservée au moyen d'un joint d'étanchéité 44.

Une première tubulure 46 formée dans le couvercle 40 relie le collecteur 38 à un circuit de vide 48 permettant de mettre en dépression le collecteur 38 ainsi que l'espace clos 34. Une deuxième tubulure 50 formée dans le couvercle 40 relie le collecteur 38 à une source de pression 52, grâce à laquelle une pression de compactage peut être introduite dans le collecteur 38 et dans l'espace clos 34.

Le couvercle 40 comporte également une troisième tubulure 54 reliée à une vanne 56. Cette vanne 56, normalement fermée, garantit alors l'étanchéité du collecteur 38. Son ouverture, commandée après la mise en oeuvre du circuit de vide 48 et après la mise en oeuvre de la source de pression 52 permet, soit de casser le vide, soit de libérer la pression de compactage.

Afin de permettre la préhension par la membrane 28 des couches élémentaires prédécoupées, cette membrane est équipée de ventouses de succion 58, sur sa face extérieure active. Ces ventouses de succion sont réparties à intervalles réguliers sur toute la surface active de la membrane, de façon à permettre la préhension de couches élémentaires de formes et de dimensions diverses.

Chacune des ventouses de succion 58 est reliée par un tube souple 60 à un compartiment d'aspiration 62 placé à l'intérieur du collecteur 38. Ce compartiment 62, qui est totalement étanche vis-à-vis du collecteur 38, peut notamment être porté par le couvercle 40, qui comporte alors une autre tubulure 64 par laquelle le compartiment 62 est relié à une source de vide 66 permettant d'établir une dépression dans le compartiment 62, assurant la préhension d'une couche élémentaire par les ventouses de succion 58.

Chacun des tubes souples 60 traverse la contre-forme 26 et la partie du support 22 située entre la contre-forme et le collecteur 38 par un passage 68 autorisant le coulissement du tube souple. Ce passage 68 est orienté perpendiculairement à la partie de la face active 26a de la contre-forme 26 sur laquelle il débouche. De plus, cette partie de la face active 26a coïncide avec l'emplacement en face duquel se trouve la ventouse 58 correspondante lorsque la membrane 28 est plaquée contre la face active 26a, sous l'effet d'une dépression dans l'espace clos 34 par le circuit de vide 48.

Au moins dans leur partie la plus proche de la membrane 28, les tubes souples 60 sont de préférence renforcés intérieurement par une armature métallique, afin d'éviter qu'un coincement des tubes ne puisse se produire entre la membrane et la contre-forme.

Bien qu'un seul compartiment d'aspiration 62 ait été représenté sur la figure 2, il est à noter que plusieurs compartiments de ce type peuvent être prévus sur l'outil de préhension 16, chacun de ces compartiments étant relié à un groupe de ventouses de succion 58 correspondant à une région déterminée de la membrane 28. Un tel agencement permet de mettre en place séparément plusieurs couches élémentaires juxtaposées au cours d'une même opération.

Par ailleurs, on observe que le collecteur 38 a uniquement pour fonction de permettre les libres mouvements des tubes souples 60 et le logement du ou des compartiments d'aspiration 62.

L'installation selon l'invention comprend également la matrice de formage 12, dont la structure particulière va à présent être décrite, également en se référant à la figure 2.

Comme la contre-forme 26, la matrice de formage 12 est montée sur un support 70, prévu pour être placé de façon statique au poste de drapage 14 (figure 1). Autour de la matrice de formage, ce support 70 forme une collerette 71 dont la section intérieure est complémentaire de la section extérieure de la butée 30 et de la nervure 23 du support 22 sur laquelle est fixée cette butée. Cette caractéristique permet d'assurer un positionnement très précis de l'outil de préhension 16 par rapport à la matrice de formage 12.

A l'intérieur de la collerette 71 et autour de la matrice de formage 12 est formée une surface de butée 72, munie d'un joint d'étanchéité 74, sur laquelle vient en appui la butée 30 lorsque l'outil de préhension 16 est emboîté dans la collerette 71 du support 70. Lorsque le contact est établi, l'espace formé entre la membrane 28 et la matrice 12 est étanche vis-à-vis de l'extérieur.

Cette dernière propriété est exploitée pour assurer le maintien des couches élémentaires déposées sur la matrice 12 par une dépression établie dans cet espace à partir de la surface de formage 12a de la matrice 12. A cet effet, la surface de formage 12a est munie, au moins dans sa partie centrale, d'une tôle perforée 76 en arrière de laquelle se trouve un collecteur 78 relié à un circuit de vide 82 par une tubulure 80 formée dans le support 70.

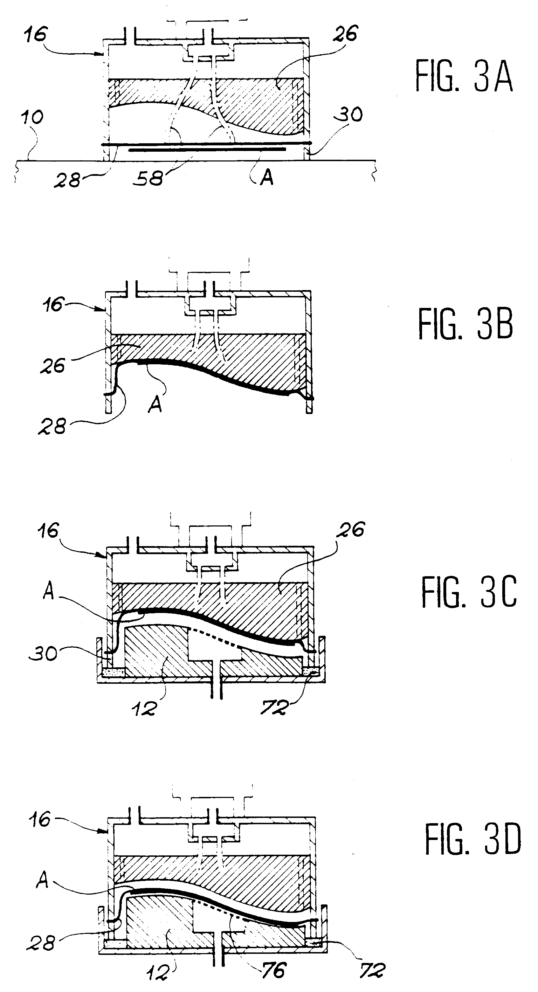

La mise en oeuvre de l'installation selon l'invention va à présent être décrite en se référant successivement aux figures 3A à 3D.

Comme l'illustre schématiquement la figure 3A, lorsque l'outil de préhension 16 est amené par le bras articulé 18 (figure 1) au-dessus d'une couche élémentaire prédécoupée A reposant sur la table 10, la butée 30 vient en appui sur la table 10 et assure un positionnement stable de l'outil par rapport à cette table. Le circuit de vide 66 (figure 2) est alors mis en oeuvre, de façon à assurer la préhension de la couche élémentaire A par les ventouses 58. Sous l'effet de la pression, la membrane 28 se déforme pour prendre la position illustrée en 28' sur la figure 2.

Les moyens d'aspiration 48 sont alors mis en oeuvre, la vanne 56 étant fermée. Par conséquent, la membrane 28 se déforme pour venir en appui sur la face active 26a de la contre-forme 26, comme l'illustre schématiquement la figure 3B et comme on l'a illustré en 28'' sur la figure 2. La couche élémentaire A saisie par l'outil 16 présente alors la forme qu'elle doit avoir dans la structure à fabriquer. Il est à noter que cette opération de mise en forme peut s'effectuer en totalité avant tout mouvement du bras articulé 18 ou, de préférence, au cours de ce mouvement, afin d'éviter toute perte de temps.

Lorsque l'outil de préhension 16 est amené à la verticale de la matrice de formage 12, et descendu jusqu'à la venue en appui de la butée 30 contre la surface de butée 72, comme l'illustre très schématiquement la figure 3C, un positionnement précis de la couche élémentaire prédécoupée A par rapport à la matrice 12 est assuré. L'actionnement de la source de vide 48 est alors interrompu et le vide à l'intérieur du collecteur 38 et de l'espace clos 34 est cassé par une brève ouverture de la vanne 56.

Après refermeture de la vanne 56, le compactage de la couche élémentaire prédécoupée A est effectué en actionnant la source de pression 52. La couche élémentaire A est alors plaquée contre la matrice 12 par la pression agissant sur la face opposée de la membrane 28. Cette situation est illustrée par la figure 3D.

La source de vide 66 est alors interrompue et le maintien de la couche élémentaire A sur la matrice 12 est assuré par l'actionnement de la source de vide 82.

Dans ces conditions, l'outil 16 peut être dégagé de la matrice 12 et ramené au-dessus de la table 10 par le bras articulé 18, pour aller chercher la couche élémentaire suivante de la structure multicouches en cours de fabrication.

La description qui précède fait apparaître de façon claire les avantages essentiels présentés par l'installation conforme à l'invention. En particulier, il apparaît que cette installation permet de réaliser de façon entièrement automatisée la préhension de couches élémentaires prédécoupées et leur drapage sur une matrice de formage, afin de fabriquer une structure multicouches en matériaux composites. Le caractère automatisé de ces opérations conduit à une amélioration sensible de la qualité et de la reproductibilité des structures ainsi obtenues. Par ailleurs, l'installation selon l'invention est particulièrement simple et peu coûteuse, ce qui constitue un avantage notable par rapport aux machines de drapage existantes.

## Revendications

1. Installation, pour la fabrication de structures multicouches en matériaux composites, par drapage de couches élémentaires prédécoupées, comprenant :
- une matrice de formage (12) ; et
- un outil (16) de préhension, de mise en forme et de compactage, comportant :
- un support (22) ;
- une contre-forme (26), complémentaire de la matrice de formage, montée sur le support (22) ;
- une membrane souple (28) fixée à sa périphérie sur un bord du support (22), en vis-à-vis de la contre-forme (26) ;
- des moyens (48) pour créer une dépression entre la contre-forme (26) et la membrane souple (28) ; et
- des moyens (52) pour presser la membrane contre la matrice de formage (12) ;
caractérisée par le fait que la membrane (28) est fixée sur un bord plan du support (22), de telle sorte qu'elle n'est normalement pas en contact avec la contre-forme (26), et par le fait que la membrane (28) est munie de ventouses de préhension (58) à dépression sur sa face opposée à la contre-forme.

2. Installation selon la revendication 1, caractérisée par le fait que l'outil (16) comporte de plus des moyens d'aspiration (66) aptes à être reliés aux ventouses (58).

3. Installation selon l'une quelconque des revendications précédentes, caractérisée par le fait que la membrane souple (28) et la contre-forme (26) définissent entre elles un espace clos (34) communiquant par des passages (36) avec un collecteur (38) formé dans le support, à l'opposé de la membrane par rapport à la contre-forme, les moyens pour créer une dépression entre la contre-forme et la membrane comprenant des moyens de mise en dépression (48) aptes à être reliés au collecteur (38), et les moyens pour presser la membrane contre la matrice de formage comprenant une source de pression (52) apte à être reliée au collecteur (38).

4. Installation selon les revendications 2 et 3 combinées, caractérisée par le fait que chacune des ventouses (58) est reliée à au moins un compartiment d'aspiration (62), placé dans le collecteur (38) et communiquant avec les moyens d'aspiration (66), par un tube souple (60) traversant la contre-forme (26) de façon à pouvoir coulisser à l'intérieur de cette dernière lors d'une déformation de la membrane (28).

5. Installation selon l'une quelconque des revendications précédentes, caractérisée par le fait que le support (22) comporte une butée (30) entourant la membrane souple (28) et faisant saillie au-delà de cette dernière.

6. Installation selon la revendication 5, caractérisée par le fait que la butée (30) du support (22) est apte à venir en appui étanche sur une surface de butée (72) entourant une surface de formage (12a) de la matrice de formage (12).

7. installation selon l'une quelconque des revendications précédentes, caractérisée par le fait que le support (22) est apte à coopérer avec des moyens de centrage (71) associés à la matrice de formage (12).

8. Installation selon l'une quelconque des revendications précédentes, caractérisée par le fait que la matrice de formage (12) présente une surface de formage (12a) munie, au moins dans une partie centrale, de perforations (76) reliées à des deuxièmes moyens d'aspiration (82).

9. Installation selon l'une quelconque des revendications précédentes, caractérisée par le fait que l'outil (16) est monté sur des moyens de transfert (18, 20) aptes à déplacer cet outil entre un poste de préhension des couches élémentaires prédécoupées et un poste de drapage comportant la matrice de formage (12).

## Claims

1. Installation for the fabrication of multilayer structures made of composites, by the drape forming of precut elementary layers, comprising:
- a forming mould (12); and
- a gripping, shaping and compacting tool (16) which includes:
- a support (22);
- a counter-former (26), complementary to the forming mould, mounted on the support (22);
- a flexible membrane (28) fixed to its periphery on one edge of the support (22), facing the counter-former (26);
- means (48) for creating a vacuum between the counter-former (26), and the flexible membrane (28); and
- means (52) for pressing the membrane against the forming mould (12);
characterized by the fact that the membrane (28) is fixed to a plane edge of the support (22) in such a way that this membrane is not normally in contact with the counter-former (26), and by the fact that the membrane (28) is provided with vacuum gripping suckers (58) on its face opposite the counter-former.

2. Installation according to Claim 1, characterized by the fact that the tool (16) additionally includes suction means (66) capable of being connected to the suckers (58).

3. Installation according to any one of the preceding claims, characterized by the fact that the flexible membrane (28) and the counter-former (26) define between them a closed space (34) communicating via passages (36) with a manifold (38) formed in the support, on the opposite side from the membrane with respect to the counter-former, the means for creating a vacuum between the counter-former and the membrane comprising vacuum-creating means (48) capable of being connected to the manifold (38), and the means for pressing the membrane against the forming mould comprising a pressure source (58) capable of being connected to the manifold (38).

4. Installation according to Claims 2 and 3 together, characterized by the fact that each of the suckers (58) is connected to at least one suction compartment (62), placed in the manifold (38) and communicating with the suction means (66), via a flexible tube (60) passing through the counter-former (26) so as to be able to slide within the latter during deformation of the membrane (28).

5. Installation according to any one of the preceding claims, characterized by the fact that the support (22) includes a stop (30) surrounding the flexible membrane (28) and projecting beyond the latter.

6. Installation according to Claim 5, characterized by the fact that the stop (30) of the support (22) is capable of coming to bear in a sealed manner on a stop surface (72) surrounding a forming surface (12a) of the forming mould (12).

7. Installation according to any one of the preceding claims, characterized by the fact that the support (22) is capable of interacting with centring means (71) associated with the forming mould (12).

8. Installation according to any one of the preceding claims, characterized by the fact that the forming mould (12) has a forming surface (12a) provided, at least in a central part, with perforations (76) connected to second suction means (82).

9. Installation according to any one of the preceding claims, characterized by the fact that the tool (16) is mounted on transfer means (18, 20) capable of moving this tool between a unit for gripping the precut elementary layers and a drape forming unit which includes the forming mould (12).

## Patentansprüche

1. Vorrichtung zur Herstellung von mehrlagigen Strukturen aus Kompositmaterialien durch Aufeinanderbringen von vorgeschnittenen Einheitsschichten, bestehend aus
- einer Formmatrize (12) und
- einem Werkzeug (16) zum Greifen, Formen und Verdichten, das
- ein Tragelement (22),
- eine Gegenform (26), die komplementär zur Formmatrize ausgebildet ist und an dem Tragelement (22) angebracht ist,
- eine biegsame Membran (28), die mit ihrer Außenkante gegenüber der Gegenform (26) an einem Rand des Tragelements (22) befestigt ist,
- Mittel (48) zur Erzeugung eines Unterdrucks zwischen der Gegenform (26) und der biegsamen Membran (28), sowie
- Mittel (52), um die Membran gegen die Formmatrize (12) zu drücken, aufweist,
dadurch gekennzeichnet,
daß die Membran (28) an einer ebenen Kante des Tragelements (22) befestigt ist, so daß sie normalerweise nicht mit der Gegenform (26) in Berührung kommt, und daß die Membran (28) an ihrer von der Gegenform abgewandten Seite mit Unterdruck-Sauggreifern (58) versehen ist.

2. Vorrichtung nach Anspruch 1, dadurch gekennzeichnet, daß das Werkzeug (16) ferner Ansaugmittel (66) aufweist, die mit den Sauggreifern (58) verbunden werden können.

3. Vorrichtung nach einem der vorherigen Ansprüche, dadurch gekennzeichnet, daß die biegsame Membran (28) und die Gegenform (26) zwischen sich einen abgeschlossenen Raum (34) bilden, der über Durchlässe (36) mit einem Kollektor (38) in Verbindung steht, der in dem Tragelement auf der von der Membran abgewandten Seite der Gegenform ausgebildet ist, wobei die Mittel zur Erzeugung eines Unterdrucks zwischen der Gegenform und der Membran aus Unterdruck-Mitteln (48) bestehen, die an den Kollektor (38) angeschlossen werden können, und wobei die Mittel zum Andrücken der Membran gegen die Formmatrize aus einer Druckquelle (52) bestehen, die mit dem Kollektor (38) verbunden werden kann.

4. Vorrichtung nach einem der vorherigen Ansprüche, dadurch gekennzeichnet, daß jeder der Sauggreifer (58) mit mindestens einem in dem Kollektor (38) angeordneten Ansaugfach (62) verbunden ist, das mit den Ansaugmitteln (66) über einen Schlauch (60) in Verbindung steht, der durch die Gegenform (26) hindurch verläuft, so daß er in deren Inneres gleiten kann, wenn die Membran (28) verformt wird.

5. Vorrichtung nach einem der vorherigen Ansprüche, dadurch gekennzeichnet, daß das Tragelement (22) einen Anschlag (30) aufweist, der die biegsame Membran (28) umgibt und über diese hinausragt.

6. Vorrichtung nach Anspruch 5, dadurch gekennzeichnet, daß der Anschlag (30) des Tragelements (22) in dichte Anlage an einer Anschlagfläche (72) kommen kann, die eine Formungsfläche (12a) der Formmatrize (12) umgibt.

7. Vorrichtung nach einem der vorherigen Ansprüche, dadurch gekennzeichnet, daß das Tragelement (22) mit Zentriermitteln (71) zusammenwirken kann, die mit der Formmatrize (12) verbunden sind.

8. Vorrichtung nach einem der vorherigen Ansprüche, dadurch gekennzeichnet, daß die Formmatrize (12) eine Formungsfläche (12a) aufweist, die zumindest in einem zentralen Bereich mit Löchern (76) versehen ist, die mit zweiten Ansaugmitteln (82) verbunden sind.

9. Vorrichtung nach einem der vorherigen Ansprüche, dadurch gekennzeichnet, daß das Werkzeug (16) auf Transfermitteln (18, 20) sitzt, die geeignet sind, dieses Werkzeug zwischen einer Station zum Ergreifen der vorgeschnittenen Einheitsschichten und einer Station zum Aufeinanderbringen, die die Formmatrize (12) enthält, hin- und herzubewegen.
